# EUROPEAN PATENT SPECIFICATION

(11) **EP 1 188 104 B1**
(45) Date of publication and mention of the grant of the patent: **09.04.2003**
(21) Application number: 00935480.4
(22) Date of filing: 25.05.2000
(51) Int. Cl.: G06F 1/00

(54) **IDENTIFICATION DEVICE FOR AUTHENTICATING A USER**
IDENTIFIZIERUNGSVORRICHTUNG ZUR AUTHENTIFIZIERUNG EINES ANWENDERS
DISPOSITIF D'IDENTIFICATION DESTINE A L'AUTHENTIFICATION D'UN UTILISATEUR

(30) Priority: 08.06.1999 IT TO990480
(43) Date of publication of application: 20.03.2002
(73) Proprietor: Eutron Infosecurity S.R.L., 24048 Curnasco di Treviolo (IT)
(72) Inventor: LEIDI, Michele, Eutron Infosecurity S.r.l., 24048 Curnasco di Treviolo (IT); CASSIA, Lucio, Eutron Infosecurity S.r.l., 24048 Curnasco di Treviolo (IT)
(74) Representative: Garavelli, Paolo
(86) International application number: IT0000216
(87) International publication number: WO00075755

(56) References cited:
- WO-A-00/42491
- US-A- 5 060 263
- US-A- 5 778 071
- L. PREUSS: "Rainbow Technologies Adds USB Support For PC And Macintosh Software Developers To Sentinel Line" NEWS RELEASE, 17 November 1998 (1998-11-17), XP002139273

## Description

The present invention refers to a process for inputting a personal identification number inside an identification device connected to the Universal Serial Bus (USB) port of a client processor through a cryptographic procedure of the "Challenge Response" type in order to prevent the interception of such device.

With the always wider spreading of the Internet network and other networks of this type, a particular and major importance has been given to problems about the controlled distribution of information on the network, in order to guarantee that these information cannot be attacked and guarantee their privacy as well, in addition to providing access to particular transactions or information only to authorised users. Several arrangements have so far been proposed, starting from the so-called protecting "hardware keys" to be connected to processors, up to more or less complex cryptographic systems with different types of software keys. The proposed solutions either are very costly to be implemented in terms of several types of resources, or do not guarantee a complete safety of the information to be protected.

US-A-5778071 discloses a pocket encrypting and authenticating communications device as contained in the preamble of Claim 1.

A device that is similar to the one used in the process of the invention is disclosed in L. Preuss: "Rainbow Technologies Adds USB Support for PC And Macintosh Software Developers To Sentinel Line" NEWS RELEASES, 17 November 1998, XP002139273. US-A-5060263 discloses a computer access control system and method.

WO 00 42491A discloses a USB-compliant personal key with integral input and output devices.

Object of the present invention is solving the above prior-art problems, by providing an hardware and software system that is of a reduced cost, easily implemented and absolutely efficient in terms of protection. In particular, the hardware device of the invention is of a simple configuration, has the sizes of a key and, once being inserted into the USB port of a computer, allows univocally recognising and authenticating the user of a network-based application and to start therewith protected and encrypted transactions on the Internet network itself. Authentication uniqueness and transaction safety are based on the features of the device, that is equipped with a microprocessor implemented for safety functions, and on private-key time-varying cryptographic algorithms.

The above and other objects and advantages of the invention, as will appear from the following description, are obtained by a process for inputting a Personal Identification Number code inside an identification device as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:
- Figure 1 is a perspective view of an embodiment of the device according to the present invention;
- Figure 2 is a block diagram of the architecture of the code-inputting system of the device of the invention;
- Figure 3 is a block diagram of the process realised by the architecture in Fig. 2;
- Figure 4 is a block diagram detailing a step of the process in Fig. 3; and
- Figure 5 is a block diagram detailing a step of the process in Fig. 3.

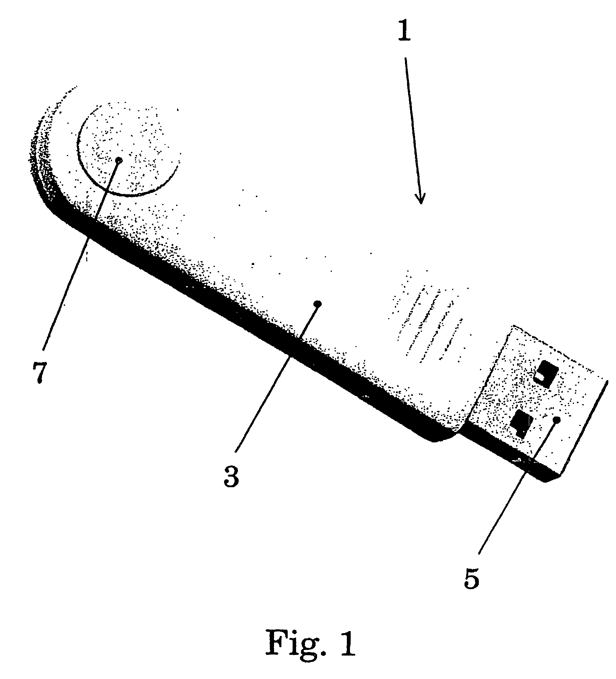

With reference to Fig. 1, the device 1 for authenticating a user in an Internet architecture environment substantially comprises an elongated support structure 3, preferably made of plastic material and adapted to be grasped by a user and inserted into a port of a client processor (not shown), for example the Universal Serial Bus (USB) port of a personal computer. For such purpose, the device 1 is equipped with a terminal 5 for the connection to the port and with a microprocessor circuitry contained inside the support structure 3; the circuitry is adapted to perform safety functions and to operate on cryptographic algorithms. Finally, the device 1 comprises activation means 7 (commonly realised in the shape of a push-button) supported by the structure 3 and adapted to control the microprocessor circuitry to allow enabling therein an authentication code, as will be described hereinbelow.

In the current and preferred embodiment, the device 1 operates on cryptographic algorithms that are of the private-key time-varying type. Due to the standard interface and "plug&play" USB and to a set of interfacing libraries of the ActiveX and Plug-In type on server and client sides, the device 1 is efficient in terms not only of safety, but also of simplicity and transparency. Its features make it an efficient tool to store keywords, electronic certificates, digital signatures, electronic purse functions or to store and protect therein other interesting information related to user or used services.

With the device 1, those who need protecting and checking the access to pages, services, data bases or more generally to areas of Internet sites, will simply have to supply authorised users of their one Internet service with a suitably initialised device 1. The users will then have to simply insert the device 1 into the USB port of the computer without performing any installation operation. The server application will take care of setting a safe communication with the device 1 in order to authenticate the user. User recognition in fact occurs depending on reserved information inside the device linked with a user keyword. Once having recognised the client and having checked affected user authorisations, the device 1 takes care of sending customised and reserved information to the user, encrypting the contents with an algorithm of the 256-bit Blowfish type, for example, with a time-varying key linked to the secret value contained into the device 1. Information can be indifferently, but not in a limiting way, HTML pages, data bases information with "web" interface, forms, download areas, and the like. The information transaction of the network is performed encrypted both from server to client, and vice versa.

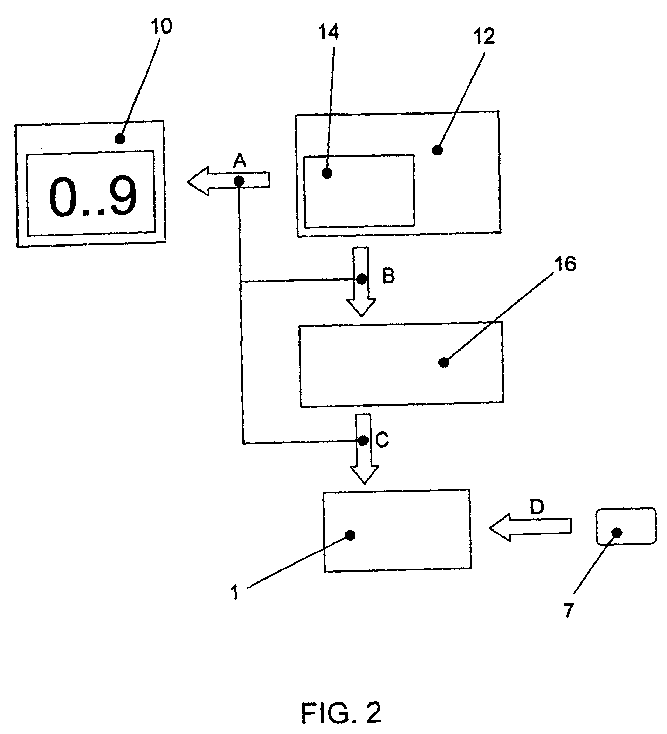

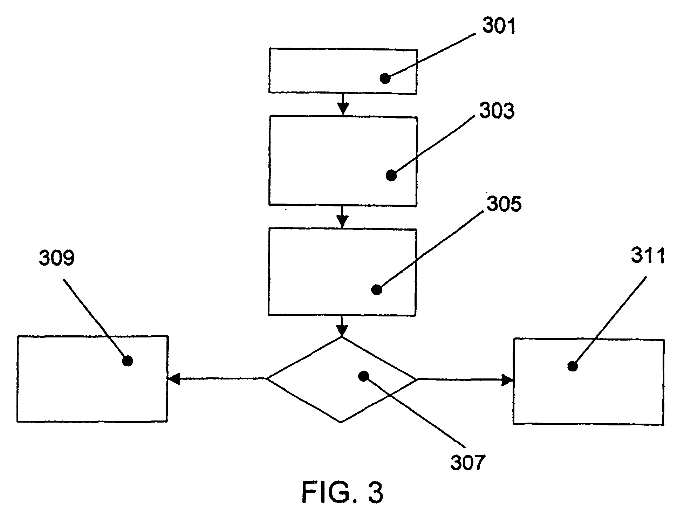

In order to be able to use the above-described device 1, it is necessary to equip it with a univocal Personal Identification Number (PIN) per user. For such purpose, a system has been implemented whose architecture is shown in Fig. 2, such system being adapted to perform a process as detailed in Figures 3 to 5.

With reference first of all to Fig. 2, the system architecture that allows using the device 1 substantially comprises a processor equipped with a graphic window 10 that displays a digit from 0 to 9. Such window cooperates with a user library 12 (arrow A in Fig. 2), that is a proprietary library that deals with managing the device 1 and, through an identification process 14 contained therein, with checking the enabling of the device 1 itself.

The user library 12 is connected (arrow B in Fig. 2) with a device driver 16, that is also a proprietary library that deals with managing the device 1 at USB level. The device driver 16 is connected (arrow C in Fig. 2) with the device 1 that receives commands (arrow D in Fig. 2) from the push-button 7. According to the flow defined by arrows A to D, in the user library 12 an internal tick pulse is generated so that, upon every tick, a digit is sent both to the window 10 for being displayed, and to the device 1 through the device driver 16; the device driver 16 queries the device 1 whether there are other digits and, if the response is affirmative, goes on with the processing, while otherwise it warns the user library 12 to stop the process. Upon every pressure of the push-button 7, the device 1 stores the currently supplied digit that is also displayed by the window 10.

The general operation of the above-described system is shown as a block diagram in Fig.s 3 to 5. Such process guarantees the maximum safety when inputting the PIN to use the device 1. The process first of all comprises, upon request of the PIN code, the activation (301) of the graphic window 10 to display a current digit from 0 to 9.

Then the PIN code is sent (303) for every digit, through a process inserted into the libraries, both to the displaying window 10 and to the device 1.

Upon pressing the push-button 7, therefore, every digit is stored (305) as belonging to the PIN code; then, the process that sends the digit both to the graphic window 10 and to the device 1, queries (307) every time the device 1 to check whether there are other digits: if the response is affirmative, the process goes on by timely sending (309) the other digits; otherwise, it stops (311) and the final PIN key is stored to validate the device 1.

Upon a more detailed examination, the operation of the PIN code storing step (305) can be divided into two major steps, where the first one deals with managing the display and dispatch of the digits to the device 1, while the second one deals with managing the push-button 7 of the device 1 itself.

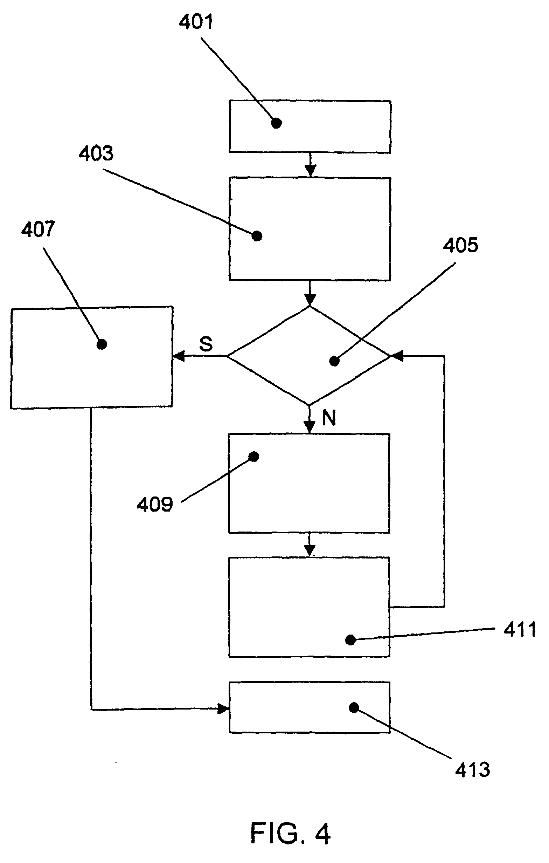

In particular, as shown in detail in Fig. 4, the displaying and dispatching step of the digits to the device 1 starts in 401 and comprises the following sub-steps:
- creating (403) the window 10 to display the digits;
- querying (405) whether the digits limit has been reached;
- in case of an affirmative response, removing (407) the displaying window 10; or
- in case of a negative response, sending (409) the digit to-the graphic window 10 and to the device 1; and
- requesting (411) to the device 1 whether the digits limit for the PIN code has been reached, returning to the querying step (405): if the response is affirmative, the process finally ends in 413.

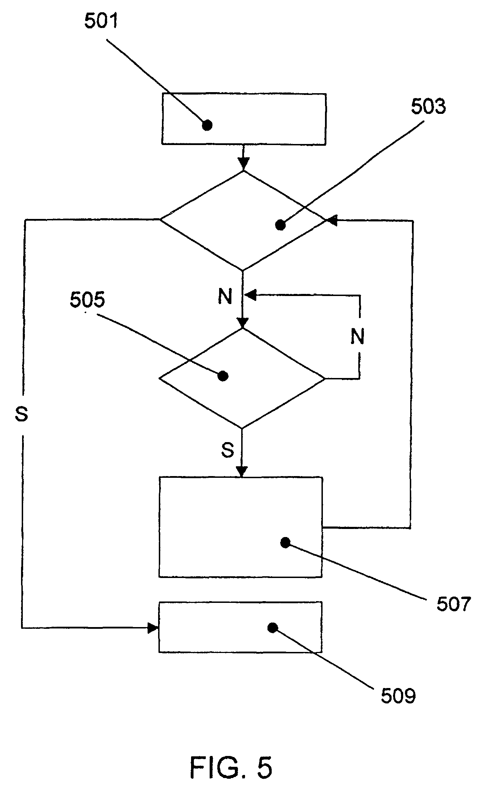

With reference to Fig. 5, instead, the flow diagram of the management step for the push-button 7 of the device 1 is shown in detail, this step being able to be divided into the following sub-steps, starting from the initial one in 501:
- querying (503) whether the digits limit has been reached;
- in case of an affirmative response, ending (509) the process; or
- in case of a negative response, checking (505) whether the push-button 7 has been pressed;
- in case of a negative response, the procedure remains waiting for a following pressure of the push-button 7; or
- in case of an affirmative response, storing (507) the last received digit and returning to the querying step (503) are performed.

After having defined the device 1 of the invention in this way and the system and process to store and validate the personal code inside the device, it is possible to practice the process of managing the accesses to reserved pages and services being present on the Internet network.

Some embodiments of the invention have been described, but obviously they are subjected to further modifications and variations within the same inventive idea. For example, several constructions of the device 1 will be possible, both from the point of view of the connections to external processor ports, and from the point of view of the internal circuitry to realise the described functionalities. Moreover, the various processes of the invention could be applied to various types of authentication devices, and the systems to realise the described processes could be implemented according to different connection configurations to various types of networks.

## Claims

1. Process for inputting a Personal Identification Number (PIN) code inside an identification device (1) in order to prevent intercepting said device (1), said process being performed through a system for inputting a Personal Identification Number (PIN) code inside said identification device (1), said identification device (1) comprising a terminal (5) for a connection to a port of a Universal Serial Bus (USB) type of a processor; a microprocessor circuitry adapted to perform safety functions and operating on cryptographic algorithms; and activation means (7) of a push-button type adapted to control said microprocessor circuitry to allow enabling therein an authentication code in order to prevent intercepting said device (1), said system comprising, connected to said device (1), a processor containing at least one user library (12) for managing said device (1), said user library (12) being equipped with an identification process (14) adapted to control the enabling of said device (1); at least one device driver (16) connected to said user library (12), said device driver (16) being a library that manages said device (1) at connection port level; and at least one graphic window (10) connected to said user library (12) to display said PIN code digit by digit, **characterised in that** the process comprises the following steps:
- upon request of said PIN code, activating (301) said graphic window (10) to display a current digit from 0 to 9;
- sending (303) every digit of said PIN code both to the displaying graphic window (10) and to the device (1);
- in case of actuation of the activation means (7) of said device (1), storing (305) every digit as belonging to said PIN code;
- querying (307) said device (1) to check whether other digits exist;
- in case of an affirmative response to said querying step (307), timely sending (309) the other digits; or
- in case of a negative response to said querying step (307), stopping (311) the process and storing the final PIN key to validate said device (1).

2. Process according to Claim 1, **characterised in that** said cryptographic algorithms performed by said microprocessor circuitry are of the private-key time-varying type.

3. Process according to Claim 2, **characterised in that** said cryptographic algorithms are of the "Challenge Response" type.

4. Process according to Claim 1, **characterised in that** said PIN code storing step (309) comprises the following steps:
- displaying and dispatching the digits to said device (1); and
- managing the activation means (7) of said device (1).

5. Process according to Claim 4, **characterised in that** said displaying and dispatching step of the digits to said device (1) comprises the following sub-steps:
- creating (403) the graphic window (10) to display the digits;
- querying (405) whether the digits limit has been reached;
- in case of an affirmative response to said querying step (405), removing (407) said displaying graphic window (10); or
- in case of a negative response to said querying step (405), sending (409) the digit to said displaying graphic window (10) and to said device (1); and
- requesting (411) to said device (1) whether the digits limit for the PIN code has been reached, returning to said querying step (405).

6. Process according to Claim 4, **characterised in that** said managing step of the activation means (7) of said device (1) comprises the following sub-steps:
- querying (503) whether the digits limit has been reached;
- in case of an affirmative response to said querying step (503), ending (509) said process; or
- in case of a negative response to said querying step (503), checking (505) whether said activation means (7) are actuated;
- in case of a negative response to said checking step (505), suspending the procedure that remains in stand-by; or
- in case of an-affirmative response to said checking step (505), storing (507) the last received digit and returning to said querying step (503).

## Patentansprüche

1. Vorgehensweise für die Einfügung eines Codes mit einer persönlichen Identifizierungsnummer (PIN) in eine Identifiziervorrichtung (1), um das Auffangen dieses Gerätes (1) zu verhindern. Dieser Vorgang wird durch ein System für die Einfügung eines Codes mit einer persönlichen Identifizierungsnummer (PIN) in das Identifiziergerät (1) ausgeführt, das ein Terminal (5) für die Verbindung mit einem Ausgang eines Prozessors des Typs Universal Serial Bus (USB), einen Mikroprozessorkreis für die Ausführung der Sicherheitsfunktionen und der Vorgänge auf die kryptographischen Algorithmen sowie Aktivierungmittel (7) des Tastentyps für die Steuerung des Mikroprozessorkreises einschliesst, um darin einen Beglaubigungscode zu befähigen, um das Auffangen des besagten Gerätes (1) zu verhindern. Dieses Sytem umfasst einen Rechner, der mit dem Gerät (1) verbunden ist und der zumindest eine Benutzerbibliothek (12) für die Verwaltung dieses Gerätes (1) enthält. Diese Benutzerbibliothek (12) ist mit einem Identifizierungsprozess (14) für die Kontrolle der Befähigung des besagten Gerätes (1) ausgestattet. Wenigstens ein device driver (16) ist mit der Benutzerbibliothek (12) verbunden. Dieser device driver (16) ist eine Bibliothek, die das besagte Gerät (1) auf dem Niveau der Verbindungstür verwaltet. Wenigstens ein Graphikfenster (10) ist mit der Benutzerbibliothek (12) für die Anzeige des PIN-Codes, eine Ziffer nach der anderen, verbunden und durch die Eigenschaft charakterisiert, dass der Vorgang folgende Phasen umfasst:
- bei Abfrage des PIN-Codes aktiviert sich (301) das besagte Graphikfenster (10) für die Anzeige einer aktuellen Ziffer von 0 bis 9;
- Eingabe (303) jeder Ziffer des PIN-Codes sowohl im graphischen Anzeigefenster (10) als im Gerät (1);
- Bei Betätigung der Aktivierungsmittel (7) des besagten Gerätes (1) Speicherung (305) einer jeden Ziffer als zugehörig zum besagten PIN;
- Befragung (307) des besagten Gerätes (1) zur Kontrolle, ob andere Ziffern existieren;
- bei bejahender Antwort auf die Befragungsphase (307), zeitbegrenzte Anzeige (309) der anderen Ziffern oder
- bei verneinder Beantwortung der Befragungsphase (307), Unterbrechung (311) des Vorganges und Speicherung des endgültigen PIN-Schlüssels für die Bestätigung des Gerätes (1).

2. Vorgehensweise laut Beanspruchung 1, charakterisiert durch die Tatsache, dass die besagten, kryptographischen Algorithmen, die von dem Mikroprozessorkreis ausgeführt werden, des im Laufe der Zeit veränderlichen Typs mit privatem Schlüssel sind.

3. Vorgehensweise laut Beanspruchung 2, charakterisiert durch die Tatsache, dass die besagten, kryptographischen Algorithmen des Typs "Challenge Response" sind.

4. Vorgehensweise laut Beanspruchung 1, charakterisiert durch die Tatsache, dass die besagte Speicherungsphase des PIN-Codes (305) folgende Phasen umfasst:
- Anzeige und Eingabe der Ziffern des besagten Gerätes (1) und
- Verwaltung der Aktivierungsmittel (7) des besagten Gerätes (1).

5. Vorgehensweise laut Beanspruchung 4, charakterisiert durch die Tatsache, dass die Phase der Anzeige und Eingabe der Ziffern in das besagte Gerät (1) die nachstehenden Unterphasen einschliesst:
- Erzeugung (403) das Graphikfensters (10) für Anzeige der Ziffern;
- Abfrage (405), ob die Zifferngrenze erreicht wurde;
- bei bejahender Antwort auf die Abfragephase (405), Wegfall (407) des betreffenden graphischen Anzeigefensters (10) oder
- bei verneinender Antwort auf die Abfrage (405), Eingabe (409) der Ziffer in das besagte graphische Anzeigefenster (10) und in das besagte Gerät (1); und
- Abfrage (411) des besagten Gerätes (1), ob die Zifferngrenze für den PIN-Code erreicht wurde, mit Rückkehr zur Abfragephase (405).

6. Vorgehensweise laut Beanspruchung 4, charakterisiert durch die Tatsache, dass die besagte Verwaltungsphase der Aktivierungsmittel (7) des besagten Gerätes (1) folgende Unterphasen einschliesst:
- Abfrage (503), ob die Zifferngrenze erreicht wurde;
- bei bejahender Antwort auf die Abfragephase (503), Abschluss (509) des besagten Vorganges oder
- bei verneinder Antwort auf die Befragungsphase (503), Kontrolle (505), ob die besagten Aktivierungsmittel (7) betätigt wurden;
- bei verneinender Antwort auf die Prüfphase (505), Einstellung des Vorganges, der im Wartezustand bleibt, oder
- bei bejahender Antwort auf besagte Prüfphase (505), Speicherung (507) der zuletzt erhaltenen Ziffer und Rückkehr zur Abfragephase (503).

## Revendications

1. Méthode pour l'introduction d'un code d'un Numéro d'Identification Personnelle (PIN) à l'intérieur d'un dispositif d'identification (1), afin d'empêcher l'interception dudit dispositif (1), ladite méthode étant effectuée à travers un système pour l'introduction d'un code d'un Numéro d'Identification Personnelle (PIN) à l'intérieur dudit dispositif d'identification (1) comprenant un terminal (5) pour la connexion à une porte d'un processeur du type Universal Serial Bus (USB); un circuit d'un microprocesseur capable d'effectuer des fonctions d'ordre sécuritaire et opérationnel sur des algorithmes cryptographiques; et des moyens d'activation (7) du type à bouton-poussoir susceptibles de commander ledit circuit du microprocesseur pour permettre l'activation, à l'intérieur de celle-ci, d'un code d'authentification dans le but d'empêcher l'interception dudit dispositif (1), ledit système étant relié au dispositif (1) et comprenant un ordinateur qui contient au moins une librairie utilisateur (12) pour la gestion dudit dispositif (1), ladite librairie utilisateur (12) étant pourvue d'un processus d'identification (14) capable de contrôler l'activation dudit dispositif (1); au moins un device driver (16) connecté à ladite librairie utilisateur (12), ledit device driver (16) étant une librairie gérant ledit dispositif (1) au niveau de porte de connexion; et au moins une fenêtre graphique (10) connectée à ladite librairie utilisateur (12) pour visualiser ledit code PIN chiffre par chiffre, **caractérisée en ce que** la méthode comprend les phases suivantes :
- Sur demande dudit code PIN, activation (301) de ladite fenêtre graphique (10) pour la visualisation d'un chiffre actuel de 0 à 9;
- envoi (303) de chaque chiffre dudit code PIN à la fenêtre graphique de visualisation (10) et au dispositif (1);
- en cas d'actionnement des moyens. d'activation (7) dudit dispositif (1), mémorisation (305) de chaque chiffre comme appartenant audit code PIN;
- interrogation (307) dudit dispositif (1) pour contrôler s'il existe d'autres chiffres;
- en cas de réponse affirmative à ladite phase d'interrogation (307), envoi temporisé (309) des autres chiffres; ou bien
- en cas de réponse négative à ladite phase d'interrogation (307), interruption (311) de la méthode et mémorisation de la clé PIN finale pour la validation dudit dispositif (1).

2. Méthode selon la Revendication 1, **caractérisée en ce que** lesdits algorithmes cryptographiques effectués par ledit circuit du microprocesseur sont du type variable dans le temps à clé privée.

3. Méthode selon la Revendication 2, **caractérisée en ce que** lesdits algorithmes cryptographiques sont du type à "Challenge Response".

4. Méthode selon la Revendication 1, **caractérisée en ce que** ladite phase de mémorisation du code PIN (305) comprend les phases suivantes:
- visualisation et acheminement des chiffres audit dispositif (1); et
- gestion des moyens d'activation (7) dudit dispositif (1).

5. Méthode selon la Revendication 4, **caractérisée en ce que** ladite phase de visualisation et d'acheminement des chiffres audit dispositif (1) comprend les sous-phases suivantes:
- création (403) de la fenêtre graphique (10) de visualisation des chiffres;
- interrogation (405) si la limite des chiffres a été atteinte;
- en cas de réponse affirmative à ladite phase d'interrogation (405), élimination (407) de ladite fenêtre graphique de visualisation (10); ou bien
- en cas de réponse négative à ladite phase d'interrogation (405), envoi (409) du chiffre à ladite fenêtre graphique de visualisation (10) et audit dispositif (1); et
- demande (411) audit dispositif (1) si la limite des chiffres pour le code PIN a été atteinte, avec retour à ladite phase d'interrogation (405).

6. Méthode selon la Revendication 4, **caractérisée en ce que** ladite phase de gestion des moyens d'activation (7) dudit dispositif (1) comprend les sous-phases suivantes:
- interrogation (503) se la limite des chiffres a été atteinte;
- en cas de réponse affirmative à ladite phase d'interrogation (503), achèvement (509) de ladite méthode; ou bien
- en cas de réponse négative à ladite phase d'interrogation (503), vérification (505) si lesdits moyens d'activation (7) sont actionnés;
- en cas de réponse négative à ladite phase de vérification (505), suspension de la procédure qui reste en phase d'attente; ou bien
- en cas de réponse affirmative à ladite phase de vérification (505), mémorisation (507) du dernier chiffre reçu et retour à ladite phase d'interrogation (503).
